(19) **Europäisches Patentamt**
**European Patent Office**
**Office européen des brevets**

(11) **EP 2 745 269 B1**

(12) **EUROPEAN PATENT SPECIFICATION**

(45) Date of publication and mention
of the grant of the patent:
**11.03.2015 Bulletin 2015/11**

(21) Application number: **12799281.6**

(22) Date of filing: **05.10.2012**

(51) Int Cl.:
*G06T 7/00* *(2006.01)*       *H04N 13/00* *(2006.01)*

(86) International application number:
**PCT/IB2012/055364**

(87) International publication number:
**WO 2013/054240 (18.04.2013 Gazette 2013/16)**

(54) **DEPTH MAP PROCESSING**

TIEFENKARTENVERARBEITUNG

TRAITEMENT D'UNE CARTE DE PROFONDEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2011 US 201161545219 P**

(43) Date of publication of application:
**25.06.2014 Bulletin 2014/26**

(73) Proprietor: **Koninklijke Philips N.V.
5656 AE Eindhoven (NL)**

(72) Inventor: **BRULS, Wilhelmus Hendrikus Alfonsus
NL-5656AE Eindhoven (NL)**

(74) Representative: **Kroeze, Johannes Antonius
Philips
Intellectual Property & Standards
P.O. Box 220
5600 AE Eindhoven (NL)**

(56) References cited:
**EP-A1- 2 184 713       EP-A1- 2 293 586
WO-A2-2007/052191**

**Description**

FIELD OF THE INVENTION

The invention relates to a method of processing a three dimensional [3D] video signal, the method comprising: deriving, from the 3D video signal, a first depth map comprising first depth values and a 2D image comprising image values corresponding to the first depth map, and generating a second depth map having second depth values from the 3D video signal and/or the first depth map by a multi-dimensional filter.

The invention further relates to a 3D video device, and a computer program.

The invention relates to the field of processing 3D video data to improve rendering on a 3D display device. In particular the depth map, either available or generated, may be inaccurate and may be improved by filtering, e.g. smoothing, by a multi-dimensional filter. Images are usually filtered in two spatial dimensions, whereas time in video data may be used as a third dimension. Bilateral filters, or cross bilateral filters that further use image data of a different domain (like image brightness values when filtering a depth map) are typical examples of such multi-dimensional filters. The depth map may have depth artifacts due to such filtering. The invention involves improvements for reducing of the depth artifacts.

BACKGROUND OF THE INVENTION

Depth map processing as such is known. Document WO2007/052191A2 e.g. relates to a method of converting a sparse depth map, comprising depth values based on stereo matching into a dense depth map. To this end left and right images are provided to control logic for depth matching, resulting in a sparse depth map. The sparse depth map together with a texture level map are subsequently used to generate a dense depth map by comparing pixels and changing the depth level of a current pixel to the depth of a previous pixel when a depth level criterion and a texture level criterion are satisfied.

Another method of processing a depth map is known from EP2184713A1. EP2184713 relates to a method for generating a depth map using monocular information by generating a first depth map for an image, wherein the first depth map corresponds with an estimate of a global depth profile of a scene depicted in the image, generating a second depth map for the image, wherein a depth value associated with a pixel in the second depth map is based on depth values in the first depth map within a region spatially proximate to the pixel and at least one of color and luminance values of the image within the region and generating a third depth map for the image using depth values from the first depth map and the second depth map, the generating scaling a depth difference, such that a difference between a depth value of the third and first depth map is scaled compared to the corresponding difference between a depth value of the second and first depth map.

The document "Discontinuity-adaptive Depth Map Filtering for 3D View Generation, by Sang-Beom Lee and Yo-Sung Ho, Gwangju Institute of Science and Technology, Korea (GIST), Immerscom 2009, May 27-29, 2009, Berkley, USA; ICST ISBN # 978-963-9799-39-4" describes a depth image-based rendering technique, which is one of the rendering processes of virtual views with a color image and a corresponding depth map. An issue of the depth image-based rendering technique is that the virtual view has no information at newly exposed areas, so called disocclusion. The general solution is to smooth the depth map using a Gaussian smoothing filter before 3D warping. However, the filtered depth map causes geometric distortion and the depth quality is seriously degraded. A depth map filtering algorithm is used to solve the disocclusion while maintaining the depth quality. In order to preserve the visual quality of the virtual view, the depth map is smoothed with further reduced deformation. After extracting object boundaries depending on the position of the virtual view, a discontinuity-adaptive smoothing filter is applied according to the distance of the object boundary and the amount of depth discontinuities.

SUMMARY OF THE INVENTION

The method described above is an example of filtering a depth map, which depth map is to be used for generating various views in a 3D rendering system. A problem of the known method is that the depth map may have depth artifacts.

It is an object of the invention to provide processing of the depth map for reducing the depth artifacts.

For this purpose, according to a first aspect of the invention, the method as described in the opening paragraph comprises, for a multi-dimensional filter that causes the second depth map to have spilling artifacts, whereas the first depth map, in corresponding locations, has less or no such artifacts,

- determining a depth difference between the first depth map and the second depth map, a positive value of the depth difference indicating a depth in the second depth map being closer to a viewer, and
- generating a third depth map by combining the first depth values and the second depth values according to a combining function in dependence of the depth difference, the combining function giving preference to the first depth values where the depth difference is positive.

For this purpose, according to a further aspect of the invention, a 3D video device for processing a 3D video signal for displaying on a 3D display, comprises input means for receiving the 3D video signal and deriving, from the 3D video signal, a first depth map and a 2D image corresponding to the first depth map, the first depth map comprising first depth values and the 2D image comprising image values, and a video processor arranged for generating a second depth map having second depth values from the 3D video signal and/or the first depth map by a multi-dimensional filter, determining a depth difference between the first depth map and the second depth map, a positive value of the depth difference indicating a depth in the second depth map being closer to a viewer, and generating a third depth map by combining the first depth values and the second depth values according to a combining function in dependence of the depth difference, the combining function giving preference to the first depth values where the depth difference is positive.

The measures have the effect of reducing depth artifacts, in particular it may reduce spilling from foreground depth values into the image background. In addition, by allowing some spilling from background depth values to foreground objects, depth jumps are somewhat reduced. In practice this implies that when such a depth map (with smaller depth jumps/transitions) is used for rendering images for new viewpoints, the regions with de-occluded textures resulting from shifting foreground objects in the new viewpoints will be smaller.

Based on the multidimensional filter and the source of the first depth map, the first and second depth map will be correlated in that the spatial locations of the depth jumps/transitions in the respective depth maps substantially correspond. Moreover, the second depth map, although more stable as a result of the filtering, will have spilling artifacts in some spatial locations, where the first depth map has less or no such artifacts. In particular, the multidimensional filter causes the second depth map to have the spilling artifacts, whereas the first depth map, in corresponding locations, has less or no such artifacts. For example, large depth differences, so called depth jumps, in the original 3D video signal or first depth map may affect values of the second depth map in the vicinity thereof. Also other discontinuities in the input values of the multi-dimensional filter, or other undesired effects due to a complex filter strategy for example in a guided filter, may so affect the output values. An example of a spilling artifact may be that the multidimensional filter moves values in the background forward near a depth jump, a brightness jump or color jump. Where this occurs, the depth difference with the first depth map will be positive, and the output or third depth map will be generated by said combining function based substantially on the first depth values.

It is to be noted that the actual representation of the depth may be a value in the depth value range used by a specific system, e.g. 0-255 where high values are close to the viewer and zero is infinity, or -512 to +511 where negative digital values represent depths in front of a display screen. Also, where depth based values and/or filtering is mentioned, such terms should be construed to also cover a disparity based representation. In practice disparity maps and values are typically based on 1/Z, Z being the depth. In the current document the definition of positive in the "positive depth difference" indicates that an element in the second depth map, e.g. a pixel in the filtered depth map contaminated by said spilling, is closer to a viewer than the corresponding element in the first depth map. If so, the third depth map will have a value substantially based on the first depth map, e.g. the original depth map before filtering, due to the preference for the first values embodied in the combining function. Advantageously, depth disturbances will be less visible in areas without depth jumps due to said filtering, whereas near depth jumps the background will be less distorted due to reducing the depth artifacts.

The invention is also based on the following recognition. The prior art document describes a smoothing filter for the depth map. Usually smoothing filters will have a distorting effect due to depth jumps or other discontinuities in the input values, so called spilling. Spilling may be advantageous at the boundary of a foreground object, because spilling results in objects having edges rounded backward, which is true for most real life objects (e.g. a face). However, the inventors have seen that spilling is specifically undesirable in the background. For example, spilling of foreground depth values of an object (e.g. a face) into the background causes visible non linear stretching effects in the background next to the object, especially when the camera or the foreground object is moving. By the proposed combining function, spilling of the foreground into the background is avoided will still allowing spilling of background into the foreground.

Optionally the combining function comprises outputting the first depth value where the depth difference is positive and the second depth value where the depth difference is negative. Advantageously a limited complexity of the function enables achieving a substantial improvement of perceived depth inaccuracies.

Optionally the combining function comprises outputting a mix of a majority part of the first depth value and a minority part of the second depth value where the depth difference is positive and the second depth value where the depth difference is negative. The effect is that, near depth jumps where the depth difference is positive, the depth output values are for more than 50% based on the first depth value, i.e. the original first depth value. Hence a smoothing effect is achieved which is reduced in the background near the depth jump. The reduction depends on the ratio of the majority and minority part. Optionally, the minority part is 25% or less. Optionally the ratio may be made dependent on an estimated size of the depth jump and/or a distance to the depth jump, where a large depth jump and/or a small distance may result in a low minority part, e.g. 10%, and where the depth jump is small or the distance is large, the minority part is higher, e.g. 50%.

Optionally, the combining function comprises outputting the second depth value where the absolute value of the depth difference is below a predetermined threshold. This has the effect that where small depth differences occur, only use is made of the filtered depth map. This function may be combined with the above options of the combining functions where the difference is above the threshold.

Optionally the filtering comprises a bilateral filter or a cross-bilateral filter or a bilateral grid filter or a cross-bilateral grid filter. Due to the bilateral filtering edges are preserved. The cross bilateral filter uses not only depth values, but also image values, such as luma and/or color. The grid filter uses, instead of all individual pixel value in the vicinity, a grid of averaged values to reduce the calculation effort. The named bilateral filters have the effect of smoothing depth values while preserving edges, whereas an amount of spilling occurs. Hence they provide a suitable preprocessing for the step of generating the third depth map described above, which locally reduces said spilling. Other examples of multi-dimensional filters that may cause spilling are guided filters.

Optionally, the method comprises at least one further cascaded processing step, the cascaded processing step comprising subtracting the third depth map from the first depth map for generating a difference depth map, stabilizing the difference depth map for generating a stabilized difference depth map, and generating a fourth depth map by adding the stabilized difference depth map and the third depth map. The effect of cascading is that remaining artifacts are further reduced. In particular in the event of using a cross bilateral filter based on depth and image values, the spilling effect in objects in the image values may be further reduced.

Further preferred embodiments of the method, 3D devices and signal according to the invention are given in the appended claims, disclosure of which is incorporated herein by reference.

BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a device for processing 3D video data in a system for displaying 3D image data,
Fig. 2 shows a 3D video processor for processing the 3D video data,
Fig. 3 shows processing of depth values,
Fig. 4 shows the enhanced depth stabilizing in a cascaded fashion,
Fig. 5 shows a 3D video processor having parallel filters, and
Fig. 6 shows a 3D video processor having depth map generation and parallel filters.

In the Figures, elements which correspond to elements already described have the same reference numerals.

DETAILED DESCRIPTION OF EMBODIMENTS

It is noted that the current invention may be used for any type of 3D video data. The system processes a depth map provided in the 3D video data. The depth map may be either originally present at the input of the system, or may be generated as described below, e.g. from left/right frames in a stereo (L+R) video signal or from 2D video. 3D video data is assumed to be available as electronic, digitally encoded, data. The current invention relates to such image data and manipulates the image data in the digital domain.

There are many different ways in which 3D video data may be formatted and transferred, called a 3D video format. Some formats are based on using a 2D channel to also carry stereo information. For example the left and right view can be interlaced or can be placed side by side and above and under. Alternatively a 2D image and a depth map may be transferred, and possibly further 3D data like occlusion or transparency data. Any method of providing or transferring the video data, such as internet or a Blu-ray Disc (BD), may provide the 3D video data.

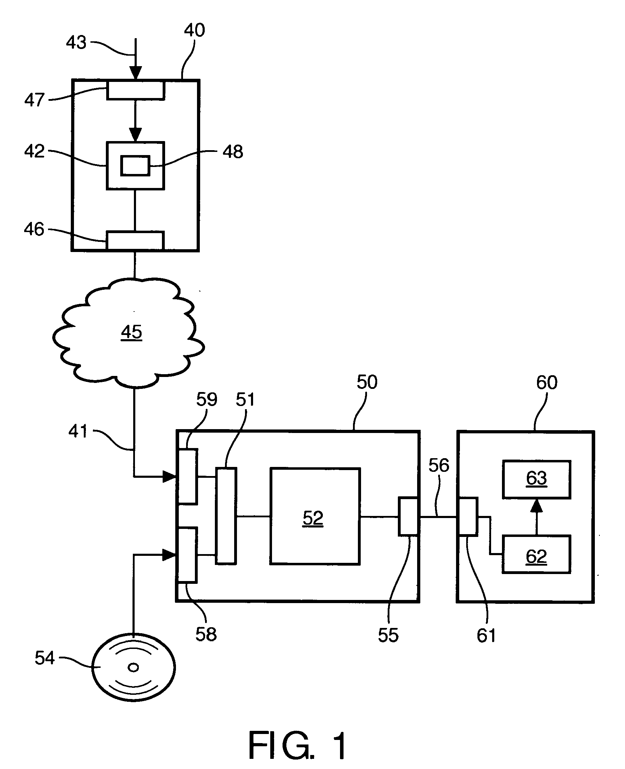

Figure 1 shows a device for processing 3D video data in a system for displaying three dimensional (3D) image data. A first 3D video device 40, called 3D source, provides and transfers a 3D video signal 41 to a further 3D video device 50, called 3D player, which is coupled to a 3D display device 60 for transferring a 3D display signal 56.

Figure 1 further shows a record carrier 54 as a carrier of the 3D video signal. The record carrier is disc-shaped and has a track and a central hole. The track, constituted by a pattern of physically detectable marks, is arranged in accordance with a spiral or concentric pattern of turns constituting substantially parallel tracks on one or more information layers. The record carrier may be optically readable, called an optical disc, e.g. a CD, DVD or BD (Blu-ray Disc). The information is embodied on the information layer by the optically detectable marks along the track, e.g. pits and lands. The track structure also comprises position information, e.g. headers and addresses, for indication the location of units of information, usually called information blocks. The record carrier 54 carries information representing digitally encoded 3D image data like video, for example encoded according to the MPEG2 or MPEG4 encoding system, in a predefined recording format like the DVD or BD format.

The 3D source has a processing unit 42 for processing 3D video data, received via an input unit 47. The input 3D video data 43 may be available from a storage system, a recording studio, from 3D camera's, etc. A video processor 42 generates the 3D video signal 41 comprising the 3D video data. The source may be arranged for transferring the 3D video signal from the video processor via an output unit 46 and to a further 3D video device, or for providing a 3D video signal for distribution, e.g. via a record carrier. The 3D video signal is based on processing input 3D video data 43, e.g. by encoding and formatting the 3D video data according to a predefined format via an encoder 48.

The 3D source may be a server, a broadcaster, a recording device, or an authoring and/or production system for manufacturing optical record carriers like the Blu-ray Disc. Blu-ray Disc provides an interactive platform for distributing video for content creators. Information on the Blu-ray Disc format is available from the website of the Blu-ray Disc association in papers on the audio-visual application format, e.g. http://www.blu-raydisc.com/Assets/Downloadablelile/2b_bdrom_audiovisualapplication_030 5-12955-15269.pdf. The production process of the optical record carrier further comprises the steps of providing a physical pattern of marks in tracks which pattern embodies the 3D video signal that may include 3D noise metadata, and subsequently shaping the material of the record carrier according to the pattern to provide the tracks of marks on at least one storage layer.

The 3D player device has an input unit 51 for receiving the 3D video signal 41. For example the device may include an optical disc unit 58 coupled to the input unit for retrieving the 3D video information from an optical record carrier 54 like a DVD or Blu-ray disc. Alternatively (or additionally), the 3D player device may include a network interface unit 59 for coupling to a network 45, for example the internet or a broadcast network, such device usually being called a set-top box. The 3D video signal may be retrieved from a remote website or media server as indicated by the 3D source 40. The 3D player may also be a satellite receiver, or a media player.

The 3D player device has a processing unit 52 coupled to the input unit 51 for processing the 3D information for generating a 3D display signal 56 to be transferred via an output interface unit 55 to the display device, e.g. a display signal according to the HDMI standard, see "High Definition Multimedia Interface; Specification Version 1.4a of March 4, 2010", the 3D portion of which being available at http://hdmi.org/manufacturer/specification.aspx for public download. The processing unit 52 is arranged for generating the image data included in the 3D display signal 56 for display on the display device 60.

The 3D display device 60 is for displaying 3D image data. The device has an input interface unit 61 for receiving the 3D display signal 56 including the 3D video data transferred from the 3D player 50. The transferred 3D video data is processed in processing unit 62 for displaying on a 3D display 63, for example a dual or lenticular LCD. The display device 60 may be any type of stereoscopic display, also called 3D display.

The video processor in the 3D video device, i.e. the processor units 52 in the 3D video device 50, is arranged for executing the following functions for processing the 3D video signal. The 3D video signal is received by the input means 51,58,59, which provides the 3D video signal representing 3D video data comprising at least a first depth map (Z1) and a 2D image corresponding to the depth map. For example the first depth map may be generated from a stereo (L+R) input signal by disparity estimation. The first depth map has first depth values and the 2D image comprising image values in a two-dimensional array of pixel. It is noted that the depth map also has a two-dimensional array of pixels, and corresponds to the 2D image, although the depth map may have a different resolution.

The video processor 62 in the 3D display device 60 is arranged for processing the 3D video data for improving the depth map. The depth map processing includes filtering the first depth map by a multi-dimensional filter for generating a second depth map having second depth values, determining a depth difference between the first depth map and the second depth map, a positive value of the depth difference indicating a depth in the second depth map being closer to a viewer, and generating a third depth map by combining the first depth values and the second depth values according to a combining function in dependence of the depth difference, the combining function giving preference to the first values where the depth difference is positive. The multi-dimensional filter may be a two-dimensional filter using two spatial dimensions. A further dimension may be time. Detailed embodiments of the depth map processing are further elucidated below.

Alternatively the video processor 52 in the 3D player device 50, or the processing unit 42 in the 3D source device, may be arranged to perform said depth map processing.

The depth map processing may further be preceded by generating a depth map from a 2D video signal, known as such. Said providing of the 3D video signal comprises receiving a 2D video signal comprising a sequence of 2D video frames, and generating the first depth map based on processing the sequence of 2D video frames. It is noted that depth maps so generated often are of limited quality, and filtering and enhancing the depth map as described in this document may substantially improve said quality. The function of generating the depth map may be implemented in the input unit 51 of the 3D player, or in the video processor 62 in the 3D display device 60, or in the processing unit 42 in the 3D source device.

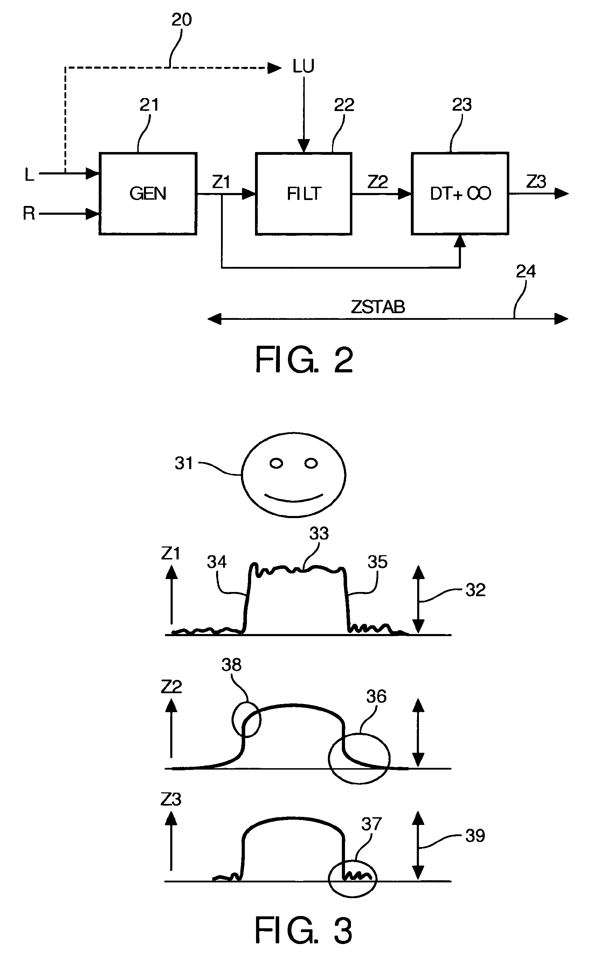

The filtering applied to the depth maps may be bilateral grid processing in order to temporally and spatially stabilize the depth maps. Beside the positive effects on the depth maps there are also unwanted side effects, as elucidated with reference to Figures 2 and 3.

Figure 2 shows a 3D video processor for processing the 3D video data. A generator unit GEN 21, in operation, receives a stereo 3D signal, also called left-right video signal, having a time-sequence of left frames L and right frames R representing a left view and a right view to be displayed for respective eyes of a viewer for generating a 3D effect. The unit then generates the first depth map by disparity estimation of the left view and the right view, and provides the 2D image based on the left view and/or the right view. The disparity estimation may be based on motion estimation algorithms used to compare the L and R frames. Large differences between the L and R view of an object are converted into high depth values, indicating a position of the object close to the viewer. The output of the generator unit is the first depth map $Z1$. It is noted that other input units may be used to provide the first depth map $Z1$ and the corresponding 2D image data.

Alternatively the generator unit may be arranged for receiving a 2D video signal comprising a time-sequence of 2D video frames, e.g. a normal (mono) 2D video signal, and generating the first depth map based on processing the time-sequence of 2D video frames.

The first depth map $Z1$ is coupled to the filter 22 for filtering the first depth map by a multi-dimensional filter for generating a second depth map $Z2$ having second depth values. Basically the filter may embody any suitable post-processing of the depth map, expressed by: $Z2 = f(Z1)$. The multi-dimensional filter may be a two-dimensional spatial filter. A further dimension may be time.

For example, the filter may be any smoothing filter, in particular any filtering operation that smears edges; like e.g. Gaussian filters. Optionally, the filter may be a bilateral filter, a cross bilateral filter or a bilateral grid filter.

As such, filtering is a fundamental operation of image processing. In the broadest sense of the term "filtering", the value of the filtered image at a given location is a function of the values of the input image in a small neighborhood of the same location. For example, Gaussian low-pass filtering computes a weighted average of pixel values in the neighborhood, in which the weights decrease with distance from the neighborhood center. Images typically vary slowly over space, so near pixels are likely to have similar values, and it is therefore appropriate to average them together. The noise values that corrupt these nearby pixels are mutually less correlated than the signal values, so noise is averaged away while signal is preserved.

However, the assumption of slow spatial variations fails at edges, which are consequently blurred by linear low-pass filtering. Bilateral filtering is a known, non-iterative scheme for edge-preserving smoothing. The basic idea underlying bilateral filtering is to do in the range of an image what traditional filters do in its domain. Two pixels can be close to one another, that is, occupy nearby spatial location, or they can be similar to one another, that is, have nearby values, possibly in a perceptually meaningful fashion. In smooth regions, pixel values in a small neighborhood are similar to each other, and the bilateral filter acts essentially as a standard domain filter, averaging away the small, weakly correlated differences between pixel values caused by noise. At a sharp boundary between a dark and a bright region the range of the values is taken into account. When the bilateral filter is centered on a pixel on the bright side of the boundary, a similarity function assumes values close to one for pixels on the same side, and values close to zero for pixels on the dark side. As a result, the filter replaces the bright pixel at the center by an average of the bright pixels in its vicinity, and essentially ignores the dark pixels. Good filtering behavior is achieved at the boundaries and crisp edges are preserved at the same time, thanks to the range component.

Due to the bilateral filtering edges are preserved. Furthermore, a cross bilateral filter may be used; the word cross indicating that two different but corresponding representations of the same image are used. An example of cross bilateral filtering can be found in (see in particular the sheets explaining joint (=cross) bilateral upsampling): http://www.stanford.edu/class/cs448f/lectures/3.1/Fast%20Filtering%20Continued.pdf

The proposed cross bilateral filter uses not only depth values, but has a further input for image values based on brightness and/or color (usually called luma values). The further input is shown as an arrow marked LU in Figure 2. The luma values may be derived from 2D input data, for example the L frames in a stereo input signal, as indicated by dashed arrow 20. The cross filtering is based on the general correspondence of an edge in luma values to an edge in depth. However, where such correspondence does not exist, a cross luma artifact in the depth map will occur.

Optionally the bilateral filter (or cross bilateral filter) may be implemented by a so-called grid filter, to reduce the amount of calculations. Instead of using individual pixel values as input for the filter, the image is subdivided in a grid and values are averaged across one section of the grid. The range of values may further be subdivided in bands, which bands may be used for setting weights in the bilateral filter. An example of bilateral grid filtering can be found in e.g. the document "Real-time Edge-Aware Image Processing with the Bilateral Grid, by Jiawen Chen, Sylvain Paris, Fredo Durand; Computer Science and Artificial Intelligence Laboratory, Massachusetts Institute of Technology" available from http://groups.csail.mit.edu/graphics/bilagrid/bilagrid web.pdf. In particular see figure 3 of this document.

Optionally for implementing the filter 22 a guided filter implementation may be used, such as commonly applied in stereo to auto-stereo conversion. As such, guided filters are known, for example from the document "Guided Image Filtering, by Kaiming He(Department of Information Engineering, The Chinese University of Hong Kong), Jian Sun (Microsoft Research Asia), and Xiaoou Tang (Shenzhen Institutes of Advanced Technology, Chinese Academy of Sciences, China)" available from http://research.microsoft.com/en-us/um/people/jiansun/papers/GuidedFilter ECCV10.pdf

The output of the filter 22, the second depth map Z2, is coupled to the input of mixing unit 23, marked DT+CO, referring to the functions of determining depths differences and combining depth maps. The mixing unit has a second input for receiving the original (unfiltered) depth map Z1. The depth difference is determined between the first depth map and the second depth map, a positive value of the depth difference indicating a depth in the second depth map being closer to a viewer. The function of combining depth maps includes generating a third depth map Z3 by combining the first depth values and the second depth values according to a combining function in dependence of the depth difference. The combining function is giving preference to the first values where the depth difference is positive. Various options are available for implementing said preference.

In a first embodiment the combining function outputs the first depth value where the depth difference is positive and the second depth value where the depth difference is negative. Basically the combining function may be denoted as:

$$\text{IF } (Z2 > Z1) \text{ output} = Z1 \text{ ELSE output} = Z2.$$

Alternatively the combining function may execute the following criteria:

(Z2 < Z1, so Z1 is closer): output is Z2;
(Z2 > Z1, so Z2 is closer): output is Z1

Furthermore a threshold TH may be added:

(Z2 - Z1 < TH): output is Z2
(Z2 - Z1 > TH): output is Z1

In a second embodiment the combining function comprises outputting a mix of a majority part of the first depth value and a minority part of the second depth value where the depth difference is positive and the second depth value where the depth difference is negative. So when the value of Z2 is lower than Z1 (a negative depth difference) the output is based on Z2, i.e. the filtered depth map. However, when the value of Z2 is higher than Z1 (a positive depth difference) the output is mainly based on Z1, i.e. the majority part of at least 50% is based on Z1 (unfiltered depth map) and a minority part of less than 50% is based on Z2. A practical value for attenuation of Z2 is 25%. The minority part is then 25%, or even a smaller percentage.

In a further embodiment the combining function comprises outputting the second depth value where the absolute value of the depth difference is below a predetermined threshold, for example 10% of the depth range. For example, the depth range of the image is represented using an 8 bit value, i.e. the depth range is 0-255. Hence small differences will not be considered to be an edge and depth values will not be clipped or manipulated.

In practice the combining function may execute the following criteria:

(Z2 < Z1, so Z1 is closer): output is 100% Z2;
(Z2 > Z1, so Z2 is closer): output is 10% Z2 + 90 % Z1

Furthermore a threshold TH may be added:

(Z2 - Z1 < TH): output is 100% Z2
(Z2 - Z1 > TH): output is 10% Z2, 90 % Z1

Further suitable ratios for Z1 and Z2 may be 75-25% or 60-40%.

In a further embodiment determining the depth difference is further enhanced by evaluating the depth values in an area and separately detecting depth jumps. If no depth jumps are detected (e.g. by applying a threshold) the mixing unit will output Z2. When a depth jump is detected, the mixing of Z1 and Z2 will be applied according to a predefined ratio. Hence, when at a distance from the nearest jump, Z2 will be used only. Said distance, or ratio, may further be adjusted based on the depth difference. A large jump may so result in a steep ratio, using substantially only Z1 in its vicinity.

Figure 3 shows processing of depth values. The top of the Figure shows a cross section of a depth map comprising an object 31, e.g. a face, in front of a background. A first depth map Z1 is schematically indicated, depth values 33 indicating the depth position of the object. The above described processing is applied to improved spatial and temporal stability of the depth maps. Z1 is the less stable depth map out of a depth or disparity estimator. Z2 is the stabilized depth after filtering, e.g. bilateral grid processing based on building tables with relation luma and depth. However due to the luma transitions at depth edges and imperfect alignment of luma and Z1, the usage of the luma and depth relation and splatting functions cause depth distortions around edges, called spilling 36,38 in Z2.

The depth values 33, and the depth jumps 34,35 at the sides of the object are schematically indicated to be noisy. In practice the depth values at the edge positions will be instable. A smoothing filter is applied to generate Z2, a more stable depth map.

In the depth map Z2 spilling artifacts are shown. A first area 36 indicates a depth artifact due to spilling of foreground depth. Second area 38 indicates a further depth artifact due to spilling of background depth. Finally the Figure shows depth map Z3. In Z3 the third area 37 indicates the effect of the invention, where the spilling has been removed by using depth values of Z1. The enhanced function ZSTAB 24, which stabilizes the depth map Z by the filtering followed by the combining function, is indicated by an arrow in Figure 2.

It is noted that the depth jump of an object with respect to the background determines occlusion when multiple views have to be generated from different viewing angles (i.e. viewer eye positions). The size of the depth jump in Z1 is indicated by arrow 32, while the size of the depth jump 39 in the processed depth map Z3 is smaller. The smaller depth jump has the advantage that less occlusion data needs to be generated for the multiple views. Reducing the need for accurate occlusion data enables simple background stretching to fill in the occlusion holes.

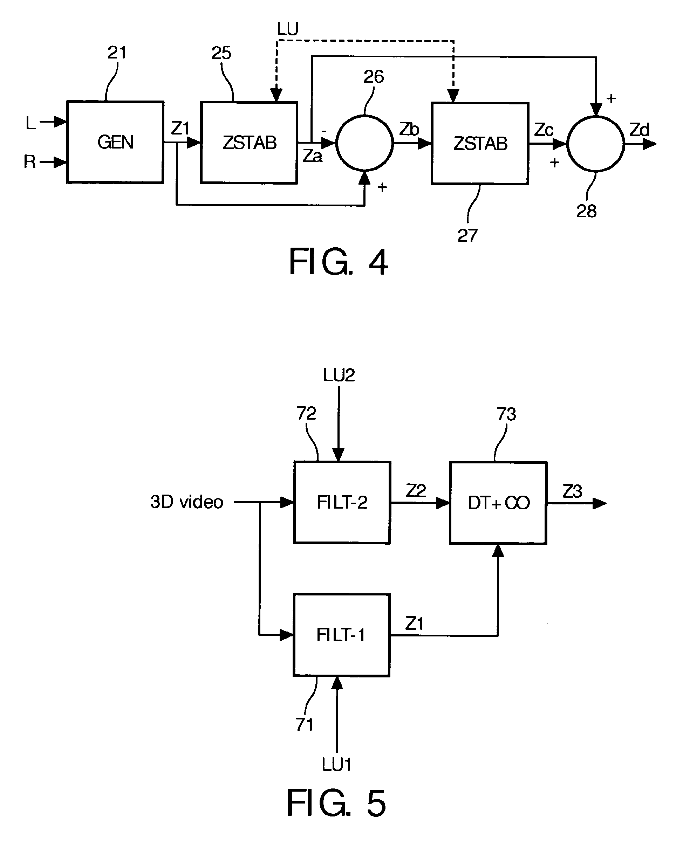

Figure 4 shows the enhanced depth stabilizing in a cascaded fashion. The circuit is based on the circuit shown in Figure 2, having a corresponding generator unit GEN 21 for generating the first depth map Z1. The first depth map Z1 is stabilized by enhanced depth map stabilizer 25 corresponding to the part marked ZSTAB in Figure 2. A cross bilateral filter implementation of ZSTAB will have a further input for the luma values (shown by a dashed input signal LU). Optionally the ZSTAB function 25 may alternatively be only a (cross) bilateral filter 22 as described above or any other suitable depth map stabilizing function. The stabilized depth map Za of the stabilizer 25 is coupled to a subtractor 26, which subtracts the original depth map Z1 from the stabilized depth map Za to generate a difference depth map Zb. The difference depth map Zb is inputted to a further enhanced stabilizer 27, so constituting a cascaded depth stabilizer. The further enhanced stabilizer 27 may again be the ZSTAB function as described above, optionally having a luma input. The same luma values as for the first enhanced stabilizer 25 may be used. A stabilized difference depth map Zc is coupled to an adder 28, which adds the stabilized depth map Za, resulting in a final depth map Zd.

Effectively, an artifact still present in stabilized depth map Za will be present also in the difference depth map Zb, being reversed due to the subtracting function. Noise from Z1 may also be present in Zb, but will be cancelled out by the further enhanced stabilizer 27, which preserved the structure of the artifact. Finally, the reversed artifact will be added to the stabilized depth map Za. For example, a face having black eyes and a black background, may result in the depth position of the eyes being affected by the background (cross-luma effect). The eyes will be pushed backward. In the original depth map Z1 the eyes will substantially have the depth of the face, hence the difference depth map Zb reflects a forward effect in the location of the eyes, which will compensate said backward push in adder 28. Hence the circuit allows to reduce cross-luma effects of a bilateral filter on the depth map, while still having the benefit of spatial and temporal stabilized depth maps.

Figure 5 shows a 3D video processor having parallel filters. A first filter FILT-1 71, in operation, receives a 3D video signal, which may comprise a depth map and 2D image data, or any other representation of 3D video data. FILT-1 constitutes a further multi-dimensional filter which generates the first depth map Z1. Optionally the first filter may be a cross-bilateral filter having a further input LU1 for luma values. A second filter FILT-2 72, in operation, also receives the 3D video signal. The second filter FILT-2 corresponds to the multidimensional filter 22 described above with reference to Figure 2, which causes said spilling. Optionally the second filter may be a cross-bilateral filter having a further input LU2 for luma values. Optionally, the second filter unit 82 may have a further input for receiving Z1. Like in Figure 2, the output of the filter 72, the second depth map Z2, is coupled to an input of mixing unit 73, marked DT+CO, referring to the functions of determining depths differences and combining depth maps as described above for mixing unit 23. The mixing unit has a further input for receiving the first depth map Z1. Similar to the serial arrangement described above the mixing unit embodies the combining function for substantially removing said spilling in the background.

In a practical example, an input depth map is generated, based on a monoscopic or stereo image using known techniques and is subsequently post-processed, i.e. filtered using two parallel two-dimensional Gaussian filters having similar filter characteristics, but different filter footprints. The first depth map is generated by a first Gaussian filter having a first filter footprint smaller than a second filter footprint of a second Gaussian filter used to generate the second depth map. As a result the second Gaussian filter will smear depth transitions over a larger area than the first Gaussian filter.

Instead of the above mentioned Gaussian filter, it may also be possible to use two cross bilateral post-processing filters. The cross bilateral filter uses the luminance and/or color information from the monoscopic image to re-align the depth transitions in the depth map with luminance and/or color transitions in the image content.

More alternatively the first depth-map is generated using an edge preserving and/or reconstructing filter, such as e.g. the (cross) bilateral filter or guided filter, whereas the second depth-map is generated using an edge smoothing filter, such as the above mentioned two-dimensional Gaussian filter.

It is further noted that optionally the post-processing is applied locally. Various criteria may be envisaged for selecting the spatial regions in the depth maps where the invention is applied. For example a method in accordance with the invention may make use of a threshold value for depth transitions in order to determine whether the method is applied to a particular spatial region. Alternatively or additionally, a spatial region for applying the method may be selected based on a proven correlation between the edges in the first and second depth map. To this end an additional spatial correlation step may be added to a method according to the invention which correlates depth values in a spatial region in the first depth map with the corresponding spatial region in the second depth map in order to identify whether the invention may be applied in that particular spatial location, e.g. by applying a threshold value on the correlation found.

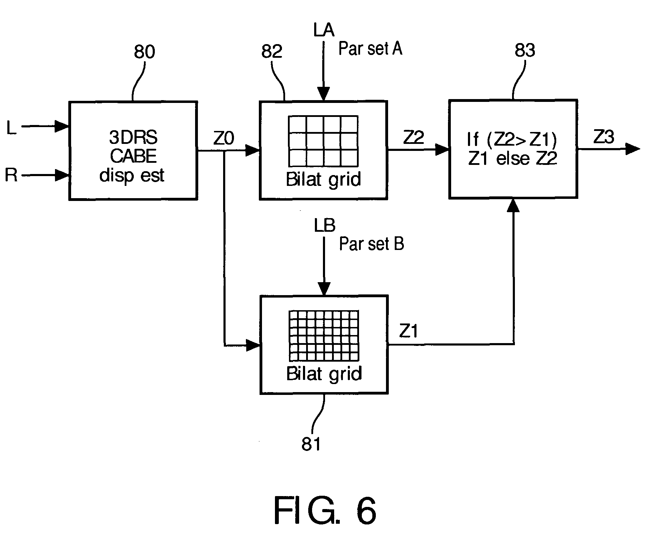

Figure 6 shows a 3D video processor having depth map generation and parallel filters. A depth map generator 80 (marked 3DRS CABE disp est) receives, in operation, a stereo 3D signal having left frames L and right frames R. The unit then generates the first depth map Z0 by disparity estimation of the left view and the right view, and provides 2D image data based on the left view and/or the right view. The output of the generator 80, Z0, is coupled to a first filter 81 that generates the first depth map Z1. The first filter is schematically shown to have a small kernel bilateral grid and a parameter set B, and an input LB for luma values. Z0 is also coupled to a second filter 82 that generates the second depth map Z2. The second filter is schematically shown to have a large kernel bilateral grid and a parameter set A, and an input LA for luma values. Like in Figure 2, the first depth map Z1 and the second depth map Z2, are coupled to an input of mixing unit 83, schematically marked to have a combining function:

$$\text{If } (Z2 > Z1) \ Z1 \text{ else } Z2.$$

The combining function refers to the various functions of determining depths differences and combining depth maps as described above for mixing unit 23. Parameter set A is chosen for a larger kernel, resulting in more reduction of noise and/or artifacts, but also in more spilling. Parameter set B is chosen for a smaller kernel, resulting on less artifact reduction but also less spilling. As indicated above a 3D video device may correspond to a 3D content source device or a 3D display device. 3D display devices are understood to comprise stereoscopic display device, such as e.g. shutter-glasses or polarizer based stereo display devices, wherein the invention may be used to convert monoscopic content to stereoscopic content, or wherein the invention is used to post-process stereoscopic content.

The invention however may be applied with equal effect in autostereoscopic display devices, such as lenticular or barrier-based multiview display devices, wherein the invention is used to convert mono/stereo content to multiple views for use with such displays.

In fact the 3D video devices are understood to include devices that call for monoscopic to stereoscopic conversion or stereoscopic (post-)processing of depth maps, such as 3D cameras that output depth-maps based on a stereoscopic camera system equipment.

It will be appreciated that the above description for clarity has described embodiments of the invention with reference to functional units and processors. However, it will be apparent that any suitable distribution of functionality between different functional units or processors may be used without detracting from the invention. For example, functionality illustrated to be performed by separate units, processors or controllers may be performed by the same processor or controller. Hence, references to specific functional units are only to be seen as references to suitable means for providing the described functionality rather than indicative of a strict logical or physical structure or organization. The invention can be implemented in any suitable form including hardware, software, firmware or any combination of these.

Although in the above most embodiments have been given for devices, the same functions are provided by corresponding methods. Such methods may optionally be implemented at least partly as computer software running on one or more data processors and/or digital signal processors. The elements and components of an embodiment of the invention may be physically, functionally and logically implemented in any suitable way.

If a feature appears to be described in connection with particular embodiments, one skilled in the art would recognize that various features of the described embodiments may be combined in accordance with the invention. Individual features may be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1.  Method of processing a three dimensional [3D] video signal, the method comprising:

    - deriving (21), from the 3D video signal, a first depth map (Z1) comprising first depth values and a 2D image comprising image values corresponding to the first depth map,
    - generating a second depth map (Z2) having second depth values from the 3D video signal and/or the first depth map by a multi-dimensional filter (22) that causes the second depth map to have spilling artifacts, whereas the first depth map, in corresponding locations, has less or no such artifacts,
    - determining a depth difference between the first depth map and the second depth map, a positive value of the depth difference indicating a depth in the second depth map being closer to a viewer, and
    - generating (23) a third depth map by combining the first depth values and the second depth values according to a combining function in dependence of the depth difference, the combining function giving preference to the first depth values where the depth difference is positive.

2.  Method as claimed in claim 1, wherein the combining function comprises outputting the first depth value where the depth difference is positive and the second depth value where the depth difference is negative.

3.  Method as claimed in claim 1, wherein the combining function comprises outputting a mix of a majority part of the first depth value and a minority part of the second depth value where the depth difference is positive and the second depth value where the depth difference is negative.

4.  Method as claimed in claim 3, wherein the minority part is 25% or less.

5.  Method as claimed in claim 1, wherein the combining function comprises outputting the second depth value where the absolute value of the depth difference is below a predetermined threshold.

6.  Method as claimed in claim 1, wherein the filtering comprises a bilateral filter or a cross-bilateral filter or a bilateral grid filter or a cross-bilateral grid filter.

7.  Method as claimed in claim 1, wherein the method comprises at least one further cascaded processing step, the cascaded processing step comprising:

    - subtracting (26) the third depth map (Za) from the first depth map (Z1) for generating a first difference depth map (Zb),
    - stabilizing (27) the first difference depth map for generating a stabilized difference depth map (Zc), the stabilizing comprising:

        - generating a second difference depth map having third depth values from the 3D video signal and/or the first difference depth map by a multi-dimensional filter (22) that causes the second difference depth map to have spilling artifacts, whereas the first difference depth map, in corresponding locations, has less or no such artifacts,
        - determining a second depth difference between the first difference depth map and the second difference depth map, a positive value of the second depth difference indicating a depth in the second difference depth map being closer to a viewer, and
        - generating (23) a stabilized difference depth map (Zc) by combining the first difference depth values and the second difference depth values according to a combining function in dependence of the second depth difference, the combining function giving preference to the first difference depth values where the second depth difference is positive and

    - generating a fourth depth map (Zd) by adding (28) the stabilized difference depth map (Zc) and the third depth map (Za).

8.  Method as claimed in claim 1, wherein the method comprises:

    - receiving a stereo 3D video signal comprising left view frames (L) and right view frames (R) and deriving the first depth map based on processing the L and R frames; or
    - receiving the 3D video signal and deriving the first depth map by a further multi-dimensional filter.

9. 3D video device (40,50) for processing a three dimensional [3D] video signal, the device comprising:

   - input means (47,51,58,59,61,71) for receiving the 3D video signal and deriving, from the 3D video signal, a first depth map (Z1) and a 2D image corresponding to the first depth map, the first depth map comprising first depth values and the 2D image comprising image values, and
   - a video processor (42,52,53) arranged for
   - generating a second depth map (Z2) having second depth values from the 3D video signal and/or the first depth map by a multi-dimensional filter (22) that causes the second depth map to have spilling artifacts, whereas the first depth map, in corresponding locations, has less or no such artifacts,
   - determining a depth difference between the first depth map and the second depth map, a positive value of the depth difference indicating a depth in the second depth map being closer to a viewer, and
   - generating (23) a third depth map by combining the first depth values and the second depth values according to a combining function in dependence of the depth difference, the combining function giving preference to the first depth values where the depth difference is positive.

10. Device as claimed in claim 9, wherein the combining function comprises outputting the first depth value where the depth difference is positive and the second depth value where the depth difference is negative.

11. Device as claimed in claim 9, wherein the combining function comprises outputting a mix of a majority part of the first depth value and a minority part of the second depth value where the depth difference is positive and the second depth value where the depth difference is negative.

12. Device as claimed in claim 9, wherein the filtering comprises a bilateral filter or a cross-bilateral filter or a bilateral grid filter or a cross-bilateral grid filter.

13. Device as claimed in claim 9, wherein the input means comprise a generator (21) for

   - receiving a left-right video signal comprising at least a left view and a right view to be displayed for respective eyes of a viewer for generating a 3D effect, and
   - generating the first depth map by disparity estimation of the left view and the right view, and
   - providing the 2D image based on the left view and/or the right view.

14. Computer program comprising computer program code means operative to cause a processor to perform the respective steps of the method according to any one of the claims 1 to 8 when the computer program is run on a computer.

15. Computer readable medium comprising the computer program as claimed in claim 14.


**Patentansprüche**

1. Verfahren zur Verarbeitung eines dreidimensionalen [3D] Videosignals, wobei das Verfahren die folgenden Schritte umfasst, wonach:

   - von dem 3D-Videosignal eine erste Tiefenkarte (Z1) mit ersten Tiefenwerten und ein 2D-Bild mit Bildwerten entsprechend der ersten Tiefenkarte abgeleitet wird (21),
   - eine zweite Tiefenkarte (Z2) mit zweiten Tiefenwertren aus dem 3D-Videosignal und/oder die erste Tiefenkarte durch einen multi-dimensionalen Filter (22) erzeugt wird, der bewirkt, dass die zweite Tiefenkarte "Spilling" Artefakten aufweist, während die erste Tiefenkarte in entsprechenden Positionen wenige oder keine solcher Artefakten aufweist,
   - eine Tiefendifferenz zwischen der ersten Tiefenkarte und der zweiten Tiefenkarte ermittelt wird , wobei ein positiver Wert der Tiefendifferenz eine Tiefe in der zweiten Tiefenkarte anzeigt, die sich näher an einem Betrachter befindet; und
   - eine dritte Tiefenkarte durch Kombinieren der ersten Tiefenwerte und der zweiten Tiefenwerte gemäß einer Kombinierungsfunktion in Abhängigkeit der Tiefendifferenz erzeugt wird (23), wobei die Kombinierungsfunktion den ersten Tiefenwerten, bei denen die Tiefendifferenz positiv ist, den Vorzug gibt.

2. Verfahren nach Anspruch 1, wobei die Kombinierungsfunktion die Ausgabe des ersten Tiefenwertes, bei dem die Tiefendifferenz positiv ist, sowie des zweiten Tiefenwertes, bei dem die Tiefendifferenz negativ ist, umfasst.

3. Verfahren nach Anspruch 1, wobei die Kombinierungsfunktion die Ausgabe einer Mischung aus einem Großteil des ersten Tiefenwertes und einem Minderheitsteil des zweiten Tiefenwertes, bei dem die Tiefendifferenz positiv ist, sowie des zweiten Tiefenwertes, bei dem die Tiefendifferenz negativ ist, umfasst.

4. Verfahren nach Anspruch 3, wobei es sich bei dem Minderheitsteil um 25% oder weniger handelt.

5. Verfahren nach Anspruch 1, wobei die Kombinierungsfunktion die Ausgabe des zweiten Tiefenwertes umfasst, bei dem der absolute Wert der Tiefendifferenz unter einem vorher festgelegten Schwellenwert liegt.

6. Verfahren nach Anspruch 1, wobei die Filterung einen Bilateral-Filter oder einen Cross-Bilateral-Filter oder einen Bilateral-Gitterfilter oder einen Cross-Bilateral-Gitterfilter umfasst.

7. Verfahren nach Anspruch 1, wobei das Verfahren mindestens einen weiteren stufenförmigen Verarbeitungsschritt umfasst, wobei gemäß dem stufenförmigen Verarbeitungsschritt:

- die dritte Tiefenkarte (Za) von der ersten Tiefenkarte (Z1) subtrahiert wird (26), um eine erste Differenz-Tiefenkarte (Zb) zu erzeugen,
- die erste Differenz-Tiefenkarte stabilisiert wird (27), um eine stabilisierte Differenz-Tiefenkarte (Zc) zu erzeugen, wobei die Stabilisierung die folgenden Schritte umfasst, wonach:

- eine zweite Differenz-Tiefenkarte mit dritten Tiefenwerten aus dem 3D-Videosignal und/oder die erste Differenz-Tiefenkarte durch einen multi-dimensionalen Filter (22) erzeugt wird, der bewirkt, dass die zweite Differenz-Tiefenkarte "Spilling" Artefakren aufweist, während die erste Differenz-Tiefenkarte in entsprechenden Positionen wenige oder keine solcher Artefakten aufweist,
- eine zweite Tiefendifferenz zwischen der ersten Differenz-Tiefenkarte und der zweiten Differenz-Tiefenkarte ermittelt wird, wobei ein positiver Wert der zweiten Tiefendifferenz eine Tiefe in der zweiten Differenz-Tiefenkarte anzeigt, die sich näher an einem Betrachter befindet; und
- eine stabilisierte Differenz-Tiefenkarte (Zc) durch Kombinieren der ersten Differenz-Tiefenwerte und der zweiten Differenz-Tiefenwerte gemäß einer Kombinierungsfunktion in Abhängigkeit der zweiten Tiefendifferenz erzeugt wird (23), wobei die Kombinierungsfunktion den ersten Differenz-Tiefenwerten, bei denen die zweite Tiefendifferenz positiv ist, den Vorzug gibt, und

- eine vierte Tiefenkarte (Zd) durch Hinzufügen (28) der stabilisierten Differenz-Tiefenkarte (Zc) und der dritten Tiefenkarte (Za) erzeugt wird.

8. Verfahren nach Anspruch 1, wobei gemäß dem Verfahren:

- ein 3D-Stereo-Videosignal mit linken View-Frames (L) und rechten View-Frames (R) empfangen und die erste Tiefenkarte aufgrund der Verarbeitung der L und R Frames abgeleitet wird, oder
- das 3D-Videosignal empfangen und die erste Tiefenkarte durch einen weiteren multi-dimensionalen Filter abgeleitet wird.

9. 3D-Videoeinrichtung (40,50) zur Verarbeitung eines dreidimensionalen [3D] Videosignals, wobei die Einrichtung umfasst:

- Eingangsmittel (47,51,58,59,61,71), um das 3D-Videosignal zu empfangen und von dem 3D-Videosignal eine erste Tiefenkarte (Z1) und ein 2D-Bild entsprechend der ersten Tiefenkarte abzuleiten, wobei die erste Tiefenkarte erste Tiefenwerte und das 2D-Bild Bildwerte umfasst, sowie
- einen Videoprozessor (42,52,53), der so eingerichtet ist, dass er
- eine zweite Tiefenkarte (Z2) mit zweiten Tiefenwerten aus dem 3D-Videosignal und/oder die erste Tiefenkarte durch einen multi-dimensionalen Filter (22) erzeugt, der bewirkt, dass die zweite Tiefenkarte "Spilling" Artefakten aufweist, während die erste Tiefenkarte in entsprechenden Positionen wenige oder keine solcher Artefakten aufweist,
- eine Tiefendifferenz zwischen der ersten Tiefenkarte und der zweiten Tiefenkarte ermittelt, wobei ein positiver Wert der Tiefendifferenz eine Tiefe in der zweiten Tiefenkarte anzeigt, die sich näher an einem Betrachter befindet; und

- eine dritte Tiefenkarte durch Kombinieren der ersten Tiefenwerte und der zweiten Tiefenwerte gemäß einer Kombinierungsfunktion in Abhängigkeit der Tiefendifferenz erzeugt (23), wobei die Kombinierungsfunktion den ersten Tiefenwerten, bei denen die Tiefendifferenz positiv ist, den Vorzug gibt.

10. Einrichtung nach Anspruch 9, wobei die Kombinierungsfunktion die Ausgabe des ersten Tiefenwertes, bei dem die Tiefendifferenz positiv ist, sowie des zweiten Tiefenwertes, bei dem die Tiefendifferenz negativ ist, umfasst.

11. Einrichtung nach Anspruch 9, wobei die Kombinierungsfunktion die Ausgabe einer Mischung aus einem Großteil des ersten Tiefenwertes und einem Minderheitsteil des zweiten Tiefenwertes, bei dem die Tiefendifferenz positiv ist, sowie des zweiten Tiefenwertes, bei dem die Tiefendifferenz negativ ist, umfasst.

12. Einrichtung nach Anspruch 9, wobei die Filterung einen Bilateral-Filter oder einen Cross-Bilateral-Filter oder einen Bilateral-Gitterfilter oder einen Cross-Bilateral-Gitterfilter umfasst.

13. Einrichtung nach Anspruch 9, wobei die Eingangsmittel einen Generator (21) umfassen, um
ein Links-Rechts-Videosignal zu empfangen, das zumindest eine für jeweilige Augen eines Betrachters darzustellende linke Ansicht und rechte Ansicht zur Erzeugung eines 3D-Effekts umfasst, und

- die erste Tiefenkarte durch Disparitätsschätzung der linken Ansicht und der rechten Ansicht zu erzeugen, und
- das 2D-Bild auf der Basis der linken Ansicht und/oder der rechten Ansicht vorzusehen.

14. Computerprogramm mit Computerprogrammcodemitteln, die bewirken, dass ein Prozessor die jeweiligen Schritte des Verfahrens nach einem der Ansprüche 1 bis 8 ausführt, wenn das Computerprogramm auf einem Computer abläuft.

15. Computerlesbares Medium, welches das Computerprogramm nach Anspruch 14 umfasst.


**Revendications**

1. Procédé de traitement d'un signal vidéo tridimensionnel [3D], le procédé comprenant :

- la dérivation (21), à partir du signal vidéo 3D, d'une première carte de profondeur (Z1) comprenant des premières valeurs de profondeur et d'une image 2D comprenant des valeurs d'image correspondant à la première carte de profondeur,
- la production d'une deuxième carte de profondeur (Z2) possédant des deuxièmes valeurs de profondeur à partir de du signal vidéo 3D et/ou de la première carte de profondeur par un filtre multidimensionnel (22) qui fait en sorte que la deuxième carte de profondeur présente des artéfacts de déversement, alors que la première carte de profondeur, dans des emplacements correspondants, présente moins ou ne présente pas de tels artéfacts,
- la détermination d'une différence de profondeur entre la première carte de profondeur et la deuxième carte de profondeur, une valeur positive de la différence de profondeur indiquant une profondeur dans la deuxième carte de profondeur qui est plus rapprochée d'un observateur, et
- la production (23) d'une troisième carte de profondeur en combinant les premières valeurs de profondeur et les deuxièmes valeurs de profondeur selon une fonction de combinaison en fonction de la différence de profondeur, la fonction de combinaison donnant une préférence aux premières valeurs de profondeur là où la différence de profondeur est positive.

2. Procédé selon la revendication 1, dans lequel la fonction de combinaison comprend la sortie de la première valeur de profondeur où la différence de profondeur est positive et de la deuxième valeur de profondeur où la différence de profondeur est négative.

3. Procédé selon la revendication 1, dans lequel la fonction de combinaison comprend la sortie d'un mélange d'une partie majoritaire de la première valeur de profondeur et d'une partie minoritaire de la deuxième valeur de profondeur où la différence de profondeur est positive et de la deuxième valeur de profondeur où la différence de profondeur est négative.

4. Procédé selon la revendication 3, dans lequel la partie minoritaire est 25% ou moins.

**5.** Procédé selon la revendication 1, dans lequel la fonction de combinaison comprend la sortie de la deuxième valeur de profondeur où la valeur absolue de la différence de profondeur est inférieure à un seuil prédéterminé.

**6.** Procédé selon la revendication 1, dans lequel le filtrage comprend un filtre bilatéral ou un filtre bilatéral croisé ou un filtre à grille bilatéral ou un filtre à grille bilatéral croisé.

**7.** Procédé selon la revendication 1, où le procédé comprend au moins une étape de traitement en cascade supplémentaire, l'étape de traitement en cascade comprenant :

- la soustraction (26) de la troisième carte de profondeur (Za) de la première carte de profondeur (Z1) pour générer une première carte de profondeur différentielle (Zb),
- la stabilisation (27) de la première carte de profondeur différentielle pour générer une carte de profondeur différentielle stabilisée (Zc), la stabilisation comprenant :

- la production d'une deuxième carte de profondeur différentielle possédant des troisièmes valeurs de profondeur provenant du signal vidéo 3D et/ou de la première carte de profondeur différentielle par un filtre multidimensionnel (22) qui fait en sorte que la deuxième carte de profondeur différentielle présente des artéfacts de déversement, alors que la première carte de profondeur différentielle, dans des emplacements correspondants, présente moins ou ne présente pas de tels artéfacts,
- la détermination d'une deuxième différence de profondeur entre la première carte de profondeur différentielle et la deuxième carte de profondeur différentielle, une valeur positive de la deuxième différence de profondeur indiquant une profondeur dans la deuxième carte de profondeur différentielle qui est plus rapprochée d'un observateur, et
- la production (23) d'une carte de profondeur différentielle stabilisée (Zc) en combinant les premières valeurs de profondeur différentielles et les deuxièmes valeurs de profondeur différentielles selon une fonction de combinaison en fonction de la deuxième différence de profondeur, la fonction de combinaison donnant une préférence aux premières valeurs de profondeur différentielles là où la deuxième différence de profondeur est positive et

- la production d'une quatrième carte de profondeur (Zd) en additionnant (28) la carte de profondeur différentielle stabilisée (Zc) et la troisième carte de profondeur (Za).

**8.** Procédé selon la revendication 1, où le procédé comprend :

- la réception d'un signal vidéo 3D stéréoscopique comprenant des trames de vue gauche (L) et des trames de vue droite (R) et la dérivation de la première carte de profondeur sur base du traitement des trames L et R ; ou
- la réception du signal vidéo 3D et la dérivation de la première carte de profondeur par un filtre multidimensionnel supplémentaire.

**9.** Dispositif vidéo 3D (40,50) pour le traitement d'un signal vidéo tridimensionnel [3D], le dispositif comprenant :

- un moyen d'entrée (47, 51, 58, 59, 61, 71) pour recevoir le signal vidéo 3D et dériver, à partir du signal vidéo 3D, une première carte de profondeur (Z1) et une image 2D correspondant à la première carte de profondeur, la première carte de profondeur comprenant des premières valeurs de profondeur et l'image 2D comprenant des valeurs d'image, et
- un processeur vidéo (42, 52, 53) disposé pour
- la production d'une deuxième carte de profondeur (Z2) possédant des deuxièmes valeurs de profondeur à partir de du signal vidéo 3D et/ou de la première carte de profondeur par un filtre multidimensionnel (22) qui fait en sorte que la deuxième carte de profondeur présente des artéfacts de déversement, alors que la première carte de profondeur, dans des emplacements correspondants, présente moins ou ne présente pas de tels artéfacts,
- la détermination d'une différence de profondeur entre la première carte de profondeur et la deuxième carte de profondeur, une valeur positive de la différence de profondeur indiquant une profondeur dans la deuxième carte de profondeur qui est plus rapprochée d'un observateur, et
- la production (23) d'une troisième carte de profondeur en combinant les premières valeurs de profondeur et les deuxièmes valeurs de profondeur selon une fonction de combinaison en fonction de la différence de profondeur, la fonction de combinaison donnant une préférence aux premières valeurs de profondeur là où la différence de profondeur est positive.

**10.** Dispositif selon la revendication 9, dans lequel la fonction de combinaison comprend la sortie de la première valeur de profondeur là où la différence de profondeur est positive et la deuxième valeur de profondeur là où la différence de profondeur est négative.

**11.** Dispositif selon la revendication 9, dans lequel la fonction de combinaison comprend la sortie d'un mélange d'une partie majoritaire de la première valeur de profondeur et d'une partie minoritaire de la deuxième valeur de profondeur là où la différence de profondeur est positive et de la deuxième valeur de profondeur là où la différence de profondeur est négative.

**12.** Dispositif selon la revendication 9, dans lequel le filtrage comprend un filtre bilatéral ou un filtre bilatéral croisé ou un filtre à grille bilatéral ou un filtre à grille bilatéral croisé.

**13.** Dispositif selon la revendication 9, dans lequel le moyen de saisie comprend un générateur (21) pour

- la réception d'un signal vidéo gauche-droit comprenant au moins une vue gauche et une vue droite à afficher pour les yeux respectifs d'un observateur pour générer un effet 3D, et
- la production de la première carte de profondeur par estimation de disparité de la vue gauche et de la vue droite, et
- la fourniture de l'image 2D sur base de la vue gauche et/ou de la vue droite.

**14.** Programme informatique comprenant un moyen de code de programme informatique opérationnel pour faire en sorte qu'un processeur exécute les étapes respectives du procédé selon l'une quelconque des revendications 1 à 8 lorsque le programme informatique est exécuté sur un ordinateur.

**15.** Support lisible par un ordinateur comprenant le programme informatique selon la revendication 14.

FIG. 1

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007052191 A2
- EP 2184713 A1
- EP 2184713 A

### Non-patent literature cited in the description

- **SANG-BEOM LEE ; YO-SUNG HO.** Discontinuity-adaptive Depth Map Filtering for 3D View Generation. *Immerscom 2009,* 27 May 2009, ISBN # 978-963-9799-39-4
- **JIAWEN CHEN ; SYLVAIN PARIS ; FREDO DURAND.** Real-time Edge-Aware Image Processing with the Bilateral Grid. *Computer Science and Artificial Intelligence Laboratory, http://groups.csail.mit.edu/graphics/bilagrid/bilagrid web.pdf*
- **KAIMING HE ; JIAN SUN.** Guided Image Filtering. *Microsoft Research Asia*
- **XIAOOU TANG.** *Chinese Academy of Sciences, http://research.microsoft.com/en-us/um/people/jiansun/papers/GuidedFilter ECCV10.pdf*